# EUROPEAN PATENT APPLICATION

(11) **EP 2 712 151 A1**
(43) Date of publication of application: **26.03.2014**
(21) Application number: 12790032.2
(22) Date of filing: 19.03.2012
(51) Int. Cl.: H04M 1/247, H04M 1/00

(54) **PORTABLE TERMINAL, CONTROL METHOD AND PROGRAM**

(30) Priority: 20.05.2011 JP 2011113709
(71) Applicant: NEC CASIO Mobile Communications, Ltd., Kawasaki-shi, Kanagawa 211-8666 (JP)
(72) Inventor: MATSUDA, Ko, Kawasaki-shi Kanagawa 211-8666 (JP)
(74) Representative: Vossius & Partner
(86) International application number: PCT/JP2012/057018
(87) International publication number: WO 2012/160867

(57) **Abstract**

A mobile terminal that can prevent deterioration of the operability depending on the type of holding means is provided. Mobile terminal 100 that is used while it is being held with holding means, including input section 801; detection section 802 that detects holding means; and control section 803 that adjusts a sensitivity of input section 801 based on a detected result of detection section 802.

## Description

### TECHNICAL FIELD

The present invention relates to mobile terminals, in particular, to mobile terminals having a touch panel.

### BACKGROUND ART

Mobile terminals such as mobile telephone terminals are provided with a sleep mode that is enabled when they are not used and that is disabled when they are used so as to restrict their various functions and reduce their power consumption.

Thus far, fold type mobile terminals in which their enclosure is foldable have been the mainstream of mobile terminals. However, in recent years, as smartphones have become common, bar type mobile terminals in which their enclosure is not foldable have increased.

In the fold type mobile terminals, when the user opens the fold, the sleep mode is disabled. By contrast, in the bar type mobile terminals, since an input device such as a touch panel is always exposed to the outside, if a sleep mode disable button that is also used as a power button is pressed, the sleep mode is disabled. Thus, if the sleep mode disable button is pressed by chance in a bag or the like, their malfunction may occur. Consequently, the user need to press the sleep disable button to disable the sleep mode and he/she perform a special operation such as touching a predetermined path on the touch panel with his or her finger. As a result, such mobile terminals impose an operational load on their users.

On the other hand, technologies that use various types of sensors such as an acceleration sensor, that detect whether or not the user is holding a mobile terminal with his or her hand based on the detected results of the sensors, and that automatically disable the sleep mode if the user is holding the mobile terminal with his or her hand have been proposed (refer to Patent Literatures 1 to 3).

### RELATED ART LITERATURE

### PATENT LITERATURE

Patent Literature 1: JP2009-111928A, Publication
Patent Literature 2: JP2009-260896A, Publication
Patent Literature 3: JP9 (1997)-172476, Publication

### SUMMARY OF THE INVENTION

### PROBLEM TO BE SOLVED BY THE INVENTION

Even if the sleep mode is automatically disabled based on a technology disclosed in Patent Literatures 1 to 3, the operability of the mobile terminal may deteriorate depending on the type of holding means with which the user holds the mobile terminal.

More specifically, the holding means with which the user holds the mobile terminal may change depending on situations. In other words, the user may hold the mobile terminal with his or her bare or gloved hand. However, since mobile terminals are expected to be used with a bare hand, if the user operates one with his or her gloved hand, its operability may deteriorate.

For example, if the user operates a mobile terminal having a capacitive touch panel with his or her gloved hand, since his or her fingers, that are conductors having sufficient electric charges enough to operate the touch panel, are insulated from the touch panel by the thickness of the glove, sufficient static electricity is not induced to enable the touch panel to work. Thus, the touch panel may not operate.

Although the user may operate a hardware key provided on a mobile terminal to increase the sensitivity of the touch panel, he or she needs to perform such an extra operation. Thus, the operability of the mobile terminal is low.

If gloves that the user is wearing get wet by rain or the like, they temporarily have conductivity. Alternatively, the user may wear gloves having conductivity. In these cases, although the user can operate the touch panel without need to increase the sensitivity of the touch panel, he or she may not be aware that the gloves have conductivity. If the user presses such a hardware key, the sensitivity of the touch panel is excessively increased and thereby the operability of the mobile terminal will deteriorate.

An object of the present invention is to solve the foregoing problem in which the operability of a mobile terminal deteriorates depending on a holding means thereof and to provide mobile terminals, control methods, and programs that can solve the foregoing problem.

### MEANS THAT SOLVE THE PROBLEM

A mobile terminal according to the present invention is a mobile terminal that is used while it is being held with holding means, including :
an input section;
a detection section that detects said holding means; and
a control section that adjusts a sensitivity of said input section based on a detected result of said detection section.

A control method according to the present invention is a control method for a mobile terminal that has an input section and that is used while it is being held with holding means, including:
detecting said holding means; and
adjusting a sensitivity of said input section based on a detected result of said holding means.

A program according to the present invention is a program that causes a mobile terminal that has an input section and that is used while it is being held with holding means to perform processes comprising:
detecting said holding means; and
adjusting a sensitivity of said input section based on a detected result of said detecting process.

### EFFECT OF THE INVENTION

According to the present invention, deterioration of the operability depending on the type of a holding means can be suppressed.

### BRIEF DESCRIPTION OF DRAWINGS

Fig. 1 is a schematic diagram showing the structure of a mobile terminal according to a first embodiment of the present invention.
Fig. 2 is a perspective view showing an example of the appearance of the mobile terminal.
Fig. 3 is a schematic diagram showing examples of a front surface and a side surface of the mobile terminal.
Fig. 4 is a flow chart describing an example of the operation of the mobile terminal.
Fig. 5 is a schematic diagram showing another example of the side surface of the mobile terminal.
Fig. 6 is a schematic diagram showing an example of a user interface.
Fig. 7 is a schematic diagram showing another example of the user interface.
Fig. 8 is a schematic diagram showing the structure of a mobile terminal according to another embodiment of the present invention.

### BEST MODES THAT CARRY OUT THE INVENTION

Next, with reference to the accompanying drawings, embodiments of the present invention will be described. In the following description, similar sections are denoted by similar reference numerals and their description will be omitted.

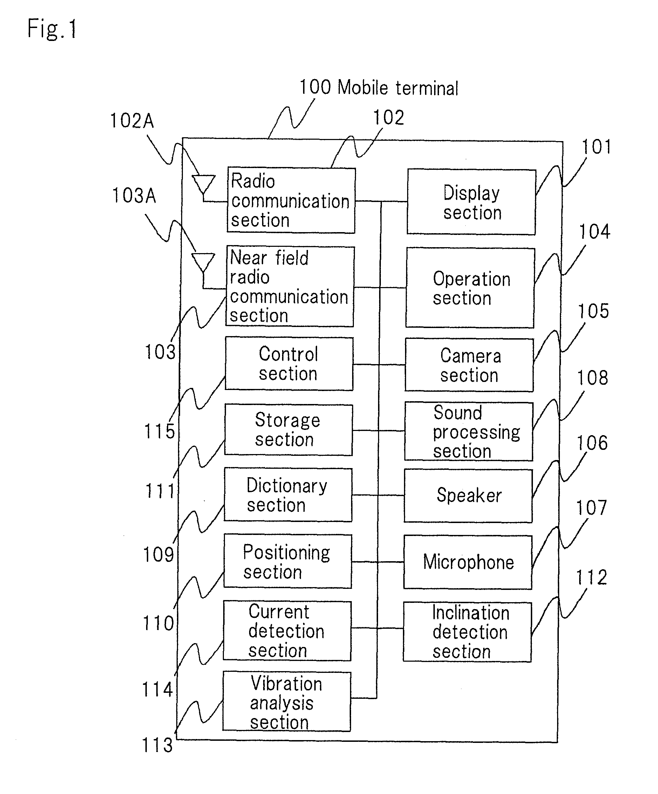

Fig. 1 is a schematic diagram showing the structure of a mobile terminal according to a first embodiment of the present invention. Mobile terminal 100 shown in Fig. 1 is a mobile information processing device having various functions such as communication functions (telephone function, electronic mail transmission/reception function, network connection function, and so forth), and a TV broadcast reception function.

Mobile terminal 100 has display section 101, radio communication section 102, near field radio communication section 103, antennas 102A and 103A, operation section 104, camera section 105, speaker 106, microphone 107, sound processing section 108, dictionary section 109, positioning section 110, storage section 111, inclination detection section 112, vibration analysis section 113, current detection section 114, and control section 115.

Display section 101 is a touch panel having both a display function that displays various types of information such as pictures, figures, characters, symbols, and so forth; and an input function that detects operations such as a user's pressing operation. According to this embodiment, the touch panel is of the capacitive type. Since display section 101 has an input function, display section 101 may be also referred to as the input section.

Radio communication section 102 communicates with a base station (not shown) through antenna 102A so as to transmit and receive information. Radio communication section 102 includes a plurality of radio modules corresponding to a plurality of communication formats such as LTE (Long Term Evolution), WCDMA (Wideband Code Division Multiple Access), CDMA 2000 (Code Division Multiple Access 2000), WLAN (Wireless Local Area Network), WiMAX (Worldwide Interoperability for Microwave Access), GSM (Global System for Mobile Communications), and PHS (Personal Handy phone System).

Near field radio communication section 103 performs near field radio communication through a non-contact type IC card (not shown) and antenna 103A so as to transmit and receive information.

Operation section 104 is an input unit that is different from the touch panel and that detects a user's operation. Operation section 104 is for example a hardware key.

Camera section 105 captures an image of the surroundings and acquires image information.

Speaker 106 is a sound output section that outputs sounds such as music and alarm sounds. Speaker 106 also operates as a sound reception section that converts a sound signal received from a communication partner into a sound. Microphone 107 is a sound transmission section that acquires the sound of surroundings as a sound signal. Sound processing section 108 processes sound signals that are input and output through speaker 106 and microphone 107.

Dictionary section 109 stores dictionary data based on which kana characters are converted into Kanji characters.

Positioning section 110 receives radio waves from a plurality of GPS (Global Positioning System) satellites (not shown) and measures the position of mobile terminal 100 based on the individual radio waves. More specifically, positioning section 110 measures arrival times at which radio waves that are output from individual GPS satellites arrive at mobile terminal 100, measures the distance between each of the GPS satellites and mobile terminal 100 based on the differences, and thereby determines the position of mobile terminal 100 based on the distances.

Storage section 111 stores telephone directory information, transmitted and received mail information, outgoing/incoming call information, content information, application program information, captured images, setting information of mobile terminal 100, and so forth.

Inclination detection section 112, vibration analysis section 113, and current detection section 114 consists of a detection section that detects the holding means that is holding mobile terminal 100. Inclination detection section 112 and vibration analysis section 113 consist of a holding state detection section that detects whether or not mobile terminal 100 is being held. Current detection section 114 is a holding means detection section that detects the holding means when mobile terminal 100 is being held.

Inclination detection section 112 has sensors such as an acceleration sensor and a gyro sensor, detects the inclination of mobile terminal 100 in a predetermined direction based on detected results of the sensors, and outputs the detected inclination. The predetermined direction is, for example, the gravitational acceleration direction (vertical direction).

Vibration analysis section 113 analyzes the vibration pattern of mobile terminal 100 based on the detected result of inclination detection section 112, detects whether or not mobile terminal 100 is being held based on the analyzed result, and outputs the detected result.

If mobile terminal 100 is being held, current detection section 114 detects the holding means that is holding mobile terminal 100.

The holding means includes a conductive holding means such as a hand that is wearing a conductive glove or a bare hand; and a non-conductive holding means such as a hand that is wearing a non-conductive glove. Conductive gloves may be made of a regularly conductive material or a non-conductive material that gets wet by rain or the like and thereby becomes temporarily conductive.

If the foregoing holding means is expected to be used, current detection section 114 has a plurality of terminals located on the enclosure of mobile terminal 100. Current detection section 114 detects a current that flows between individual terminals and thereby detects the holding means based on the detected result.

Control section 115 controls the individual sections of mobile terminal 100 so as to control the functions of mobile terminal 100 such as telephone function, mail function, Internet (web) connection function, camera function, television reception function, and content reproduction function.

In addition, control section 115 adjusts the sensitivity of an input mechanism of at least display section 101 based on both the detected result of the holding state detection section having inclination detection section 112 and vibration analysis section 113 and the detected result of current detection section 114. More specifically, control section 115 adjusts the sensitivity of the input mechanism of display section 101.

For example, if the holding state detection section detects that mobile terminal 100 is not being held, control section 115 enables the sleep mode that restricts at least the operation of display section 101. If the holding state detection section detects that mobile terminal 100 is being held, control section 115 disables the sleep mode and adjusts the sensitivity for the input function of display section 101 based on the detected result of current detection section 114.

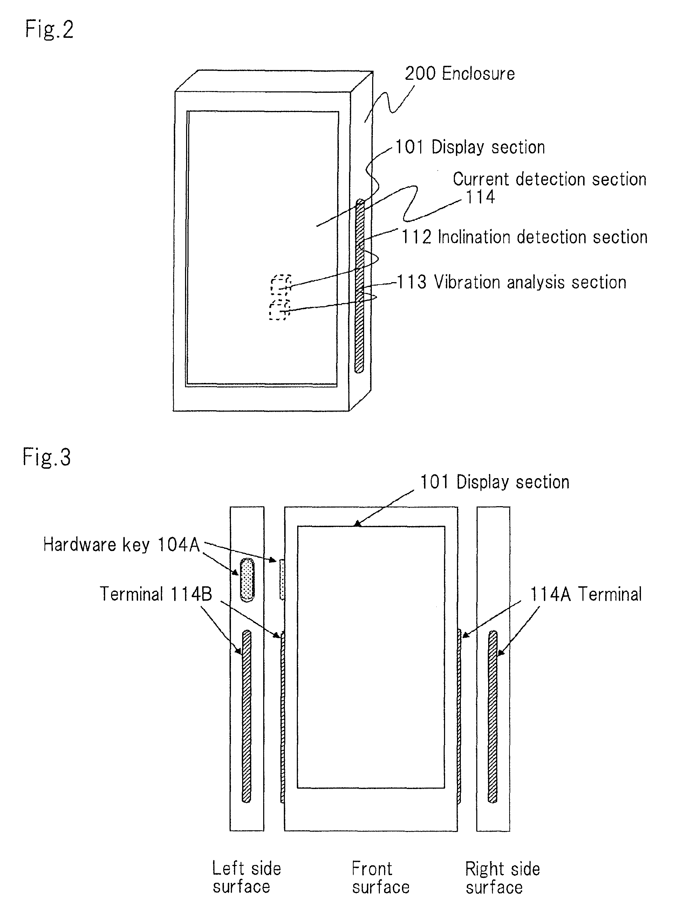

Fig. 2 is a perspective view showing an example of appearance of mobile terminal 100. Fig. 3 is a schematic diagram showing a front surface and a side surface of mobile terminal 100 shown in Fig. 2.

In the example shown in Fig. 2 and Fig. 3, mobile terminal 100 has enclosure 200. Display section 101 that is a touch panel is exposed on the front surface of enclosure 200. Inclination detection section 112 and vibration analysis section 113 that consist of an attitude detection section are located in enclosure 200. Hardware key 104A that is an example of operation section 104 is located on the left side surface of enclosure 200.

In the example shown in Fig. 2 and Fig. 3, it is assumed that the user holds the left side surface and the right side surface of mobile terminal 100 with his or her hand (bare hand or gloved hand). Thus, current detection section 114 has terminals 114A and 114B located on the left side surface and right side surface of enclosure 200, respectively.

In this case, if the user holds mobile terminal 100 with the conductive holding means such as his or her bare hand, since an electric current flows between terminals 114A and 114B, current detection section 114 detects the current that denotes that the holding means is a conductive holding means. In contrast, if the user holds mobile terminal 100 with a non-conductive holding means, since no electric current flows between terminals 114A and 114B, current detection section 114 detects no current that denotes that the holding means is a non-conductive holding means.

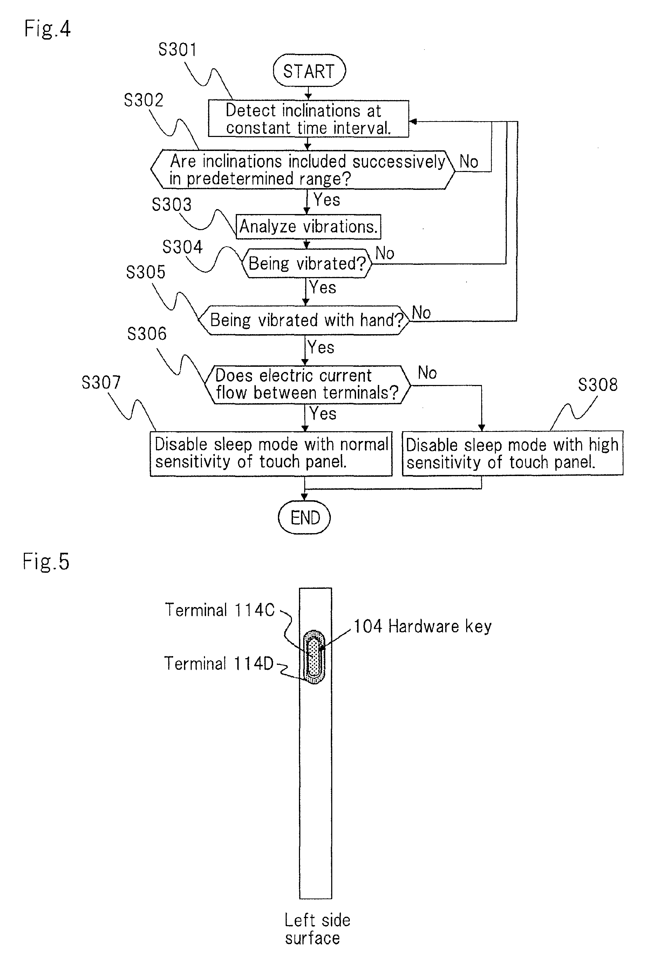

Fig. 4 is a schematic diagram describing the operation of mobile terminal 100. It is assumed that mobile terminal 100 has been set for the sleep mode.

If mobile terminal 100 has been set for the sleep mode, control section 115 operates inclination detection section 112 at a constant time interval such that inclination detection section 112 detects the inclination of mobile terminal 100 at the constant time interval and receives the detected results from inclination detection section 112 (at step S301).

Control section 115 determines whether or not the inclinations of mobile terminal 100 are included in a predetermined range successively for a predetermined time (at step S302).

More specifically, control section 115 causes the predetermined time to become longer than the foregoing constant time and determines whether or not all the inclinations represented by the determined results received in the predetermined time are included in the predetermined range. If all the inclinations are included in the predetermined range, control section 115 determines that the inclinations of mobile terminal 100 are included in the predetermined range successively for the predetermined time. In contrast, if at least one of the inclinations is not included in the predetermined range, control section 115 determines that the inclinations of mobile terminal 100 are not included in the predetermined range for the predetermined time.

The predetermined range is a range of inclinations of mobile terminal 100 that the user holds with his or her hand. The predetermined range may have been specified based on the shape and so forth of mobile terminal 100. Alternatively, the predetermined range may be set by the user. The predetermined range is stored for example in storage section 111.

If the inclinations of mobile terminal 100 are included in the predetermined range successively for the predetermined time, control section 115 generates vibration information that represents time changes of the inclinations of mobile terminal 100 of the detected results as the vibration pattern of mobile terminal 100 and outputs the vibration information to vibration analysis section 113. When vibration analysis section 113 receives the vibration information, vibration analysis section 113 analyzes the vibration pattern of mobile terminal 100 based on the vibration information (at step S303). If the inclinations of mobile terminal 100 are not included in the predetermined range for the predetermined time, control section 115 determines that mobile terminal 100 is not being held and then the flow returns to step S301.

When vibration analysis section 113 analyzes the vibration pattern of mobile terminal 100, vibration analysis section 113 determines whether or not mobile terminal 100 is vibrating based on the vibration information. If the inclinations of mobile terminal 100 are constant for the constant time or the maximum value of changes of the inclinations of mobile terminal 100 for the constant time is less than a threshold, vibration analysis section 113 determines that mobile terminal 100 is not vibrating. In contrast, if the inclinations of mobile terminal 100 are not constant for the constant time or the maximum value of changes of the inclinations of mobile terminal 100 for the constant time is equal to or greater than the threshold, vibration analysis section 113 determines that mobile terminal 100 is vibrating.

If mobile terminal 100 is not vibrating, vibration analysis section 113 notifies control section 115 of information that denotes that mobile terminal 100 is not being held with a hand. When control section 115 receives the information, control section 115 determines that mobile terminal 100 is placed on a stationary article such as a desk (at step S304) and then the flow returns to step S301.

If mobile terminal 100 is vibrating, vibration analysis section 113 more precisely analyzes the vibration information and determines whether or not the vibration information denotes that the vibration pattern represents holding vibration that occurs when mobile terminal 100 is being held with a hand.

More specifically, vibration analysis section 113 has stored a mode (wave form) that represents time changes of the inclinations of mobile terminal 100 that is being held with a hand. Vibration analysis section 113 obtains the similarity between the vibration information and the mode and determines whether or not the similarity is equal to or greater than a predetermined value. If the similarity is equal to or greater than the predetermined value, vibration analysis section 113 determines that the vibration information denotes that the vibration pattern represents a holding vibration. In contrast, if the similarity is less than the predetermined value, vibration analysis section 113 determines that the vibration information denotes that the vibration pattern does not represent a holding vibration. The similarity is for example a correlation function of vibration information and mode.

Thereafter, vibration analysis section 113 outputs the determined result to control section 115. When control section 115 receives the determined result, control section 115 checks the determined result. If the vibration information does not denotes that the vibration pattern represents a holding vibration, control section 115 determines that mobile terminal 100 is placed on a stationary article such as a desk (at step S305) and then the flow returns to step S301.

In contrast, if the vibration information denotes that the vibration pattern represents a holding vibration, control section 115 determines that the user is holding mobile terminal 100 and then causes current detection section 114 to operate. Current detection section 114 determines whether or not an electric current flows between terminals 114A and 114B (at step S306).

If an electric current flows between terminals 114 and 114B, current detection section 114 notifies control section 115 of information that denotes that the holding means is a conductive holding means. When control section 115 receives the information, control section 115 sets the sensitivity of display section 101 for a first sensitivity that is the normal sensitivity and disables the sleep mode (at step S307).

In contrast, if no electric current flows between terminals 114A and 114B, current detection section 114 notifies control section 115 of information that denotes that the holding means is a non-conductive holding means as a detected result. When control section 115 receives the information, control section 115 sets the sensitivity of display section 101 for a second sensitivity that is greater than the first sensitivity and then disables the sleep mode (at step S308).

As described above, according to this embodiment, the input operation of display section 101 is controlled depending on the holding means that is holding mobile terminal 100. Thus, deterioration of the operability depending on the holding means can be prevented.

In addition, according to this embodiment, since the holding means is detected depending on whether or not a current flows between terminals 114A and 114B located on enclosure 200, when the user just holds mobile terminal 100, the holding means can be detected.

In addition, according to this embodiment, since the sensitivity of display section 101 is adjusted depending on whether an electric current flows between terminals 114A and 114B, a hardware key or the like that is used to adjust the sensitivity of display section 101 can be omitted. In addition, even if the user is holding mobile terminal 100 with his or her gloved hand that gets wet by rain or the like and thereby becomes conductive, the sensitivity of display section 101 can be prevented from being adjusted by mistake.

Next, another embodiment of the present invention will be described.

The basic structure of mobile terminal 100 according to this embodiment is the same as that shown in Fig. 1 and Fig. 2 except that current detection section 114 measures the resistance between terminals 114A and 114B and that control section 115 determines whether or not electric current flows between terminals 114A and 114B based on the resistance. In this case, if the resistance is equal to or greater than a predetermined value, control section 115 determines that no electric current flows between terminals 114A and 114B. In contrast, if the resistance is less than the predetermined value, control section 115 determines that electric current flows between terminals 114A and 114B.

In addition, the terminals of current detection section 114 may not be located on the left side surface and right side surface of enclosure 200 as shown in Fig. 3. Alternatively, a plurality of terminals may be located on one side surface of enclosure 200. In this case, the individual terminals are located such that when the user holds mobile terminal 100, they touch different parts of the one hand such as a finger and a palm or different parts of a palm.

Alternatively, at least one of terminals of current detection section 114 may be located on hardware key 104. For example, as shown in Fig. 5, terminals 114C and 114D may be provided such that terminal 114C is located on hardware key 104 and terminal 114D is located in the neighborhood of hardware key 104.

At this point, it is preferred that when hardware key 104 is pressed, control section 115 be notified that mobile terminal 100 is being held. In this case, since hardware key 104 becomes the holding state detection section, inclination detection section 112 and vibration analysis section 113 may be omitted. Thus, power consumption for the operations of inclination detection section 112 and vibration analysis section 113 can be reduced.

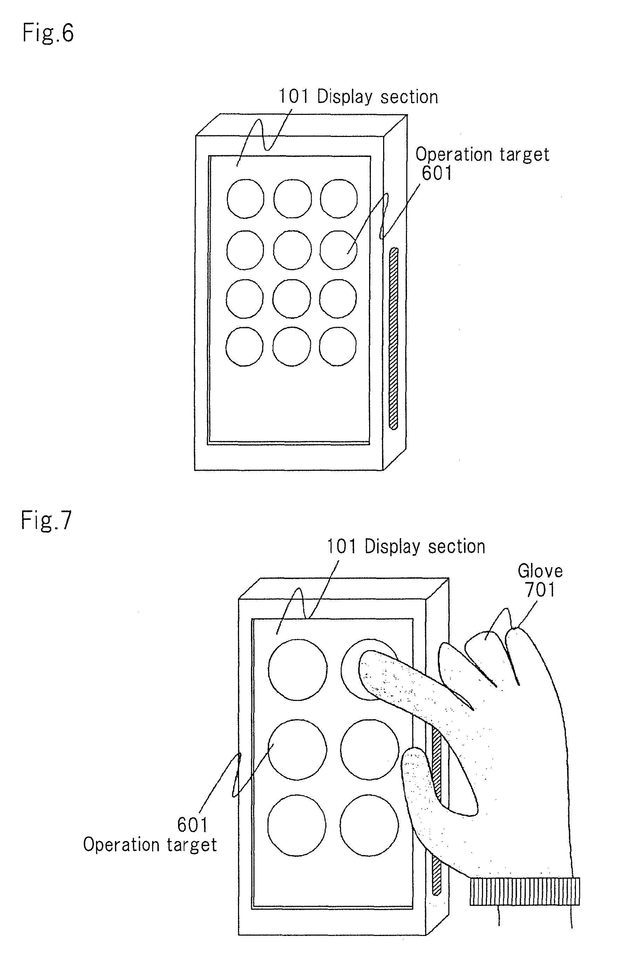

Alternatively, control section 115 may adjust a user interface for the sensitivity of display section 101 based on the type of the holding means. For example, as shown in Fig. 6, if display section 101 displays operation target 601 such as an icon that the user operates and control section 115 detects a user's operation for operation target 601, control section 115 adjusts the size of operation target 601 based on the type of the holding means so as to adjust the response region of operation target 601. More specifically, if the holding means is a conductive holding means, control section 115 causes display section 101 to display operation target 601 in a first size that is the normal size. If the holding means is a non-conductive holding means, as shown in Fig. 7, since it is assumed that the user is wearing gloves 701, control section 115 causes display section 101 to display operation target 601 in a second size that is greater than the first size.

If the user who is wearing gloves uses a touch pen, since it is not necessary to enlarge the operation target, the user is preferably able to set to adjust the size of the operation target.

Since the area of the touch panel touched with a gloved hand is greater than that with a bare hand depending on the type and sensitivity of the touch panel that is display section 101, the sensitivity of the touch panel touched with the gloved hand may have to be decreased compared to that with the bare hand. Thus, if the holding means is a conductive holding means, control section 115 may set the sensitivity of display section 101 for a first sensitivity that is the normal sensitivity. In contrast, if the holding means is a non-conductive holding means, control section 115 may set the sensitivity of display section 101 for a third sensitivity that is lower than the first sensitivity.

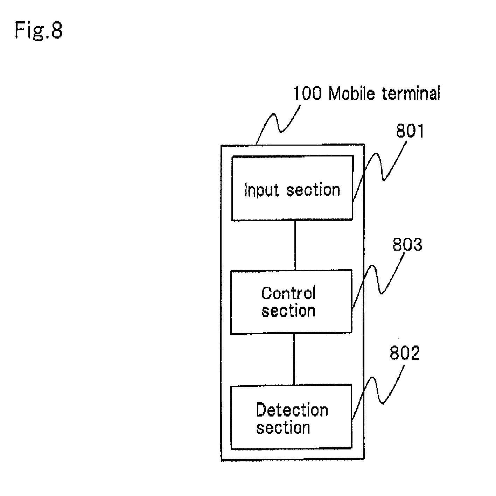

Alternatively, mobile terminal 100 may have a structure as shown in Fig. 8. In Fig. 8, mobile terminal 100 has input section 801, detection section 802, and control section 803.

Input section 801 may be a touch panel that is, for example, display section 101, a hardware key that is for example operation section 104, both of the touch panel and the hardware key, or another input unit.

Detection section 802 detects the holding means that is holding mobile terminal 100.

Control section 803 controls the operation of input section 801 based on the detected result of detection section 802. If input section 801 is a hardware key and the user is wearing gloves, he or she may feel difficulty to press the hardware key. Thus, if the holding means is a conductive holding means, control section 803 sets the sensitivity of display section 101 for a first sensitivity that is the normal sensitivity. In contrast, if the holding means is a non-conductive holding means, control section 803 sets the sensitivity of display section 101 for a second sensitivity that is greater than the first sensitivity.

The illustrated structures of the foregoing embodiments are just examples. Thus, the present invention is not limited to such structures.

For example, the functions of mobile terminal 100 may be accomplished in such a manner that a program that accomplishes the functions is recorded on a record medium from which a computer can read the program and then the program recorded on the record medium is read and executed by the computer.

The present application claims priority based on Japanese Patent Application JP 2011-113709 filed on May 20, 2011, the entire contents of which are incorporated herein by reference in its entirety.

### DESCRIPTION OF REFERENCE NUMERALS

- 100: Mobile terminal
- 101: Display section
- 102: Radio communication section
- 103: Near field radio communication section
- 102A, 103A: Antennas
- 104: Operation section
- 104: Hardware key
- 105: Camera section
- 106: Speaker
- 107: Microphone
- 108: Sound processing section
- 109: Dictionary section
- 110: Positioning section
- 111: Storage section
- 112: Inclination detection section
- 113: Vibration analysis section
- 114: Current detection section
- 115, 802: Control sections
- 801: Input section
- 803: Detection section
- 114A to 114D: Terminals

## Claims

1. A mobile terminal that is used while it is being held with holding means, comprising:
an input section;
a detection section that detects said holding means; and
a control section that adjusts a sensitivity of said input section based on a detected result of said detection section.

2. The mobile terminal as set forth in claim 1,
wherein said detection section includes:
a holding state detection section that detects whether or not said mobile terminal is being held; and
a holding means detection section that has a plurality of terminals located on an enclosure of said mobile terminal, and
wherein if said mobile terminal is being held, said holding means detection section detects said holding means depending on whether an electric current flows between said plurality of terminals.

3. The mobile terminal as set forth in claim 2,
wherein said holding state detection section includes:
an inclination detection section that detects an inclination of said mobile terminal; and
a vibration analysis section that analyzes a vibration pattern of said mobile terminal based on a detected result of said inclination detection section and detects whether or not said mobile terminal is being held based on an analyzed result of said vibration result.

4. The mobile terminal as set forth in claim 2 or 3,
wherein said holding state detection section is a hardware key that detects that said mobile terminal is being held when said hardware key is being pressed, and
wherein at least one of said plurality of terminals is located on said hardware key.

5. The mobile terminal as set forth in any one of claim 2 to 4,
wherein if an electric current flows between said plurality of terminals, said holding means detection section detects that said holding means is conductive holding means or if no electric current flows between said plurality of terminals, said holding means detection section detects that said holding means is non-conductive holding means.

6. The mobile terminal as set forth in claim 5,
wherein if said holding means is said conductive holding means, said control section sets a sensitivity of said input section for a first sensitivity or if said holding means is said non-conductive holding means, said control section sets the sensitivity of said input section for a second sensitivity that is more highly sensitive than said first sensitivity.

7. The mobile terminal as set forth in any one of claims 1 to 6,
wherein said input section has a touch panel that displays an operation target that the user operates and that detects an operation for said operation target, and
wherein said control section adjusts a size of said operation target based on a detected result of said touch panel.

8. A control method for a mobile terminal that has an input section and that is used while it is being held with holding means, comprising:
detecting said holding means; and
adjusting a sensitivity of said input section based on a detected result of said holding means.

9. A program that causes a mobile terminal that has an input section and that is used while it is being held with holding means to perform processes comprising:
detecting said holding means; and
adjusting a sensitivity of said input section based on a detected result of said detecting process.
